# EUROPÄISCHE PATENTANMELDUNG

(11) **EP 4 513 053 A1**
(43) Veröffentlichungstag der Anmeldung: **26.02.2025**
(21) Anmeldenummer: 24195501.2
(22) Anmeldetag: 20.08.2024
(51) Int. Cl.: F16F 9/32, F16F 9/38, F16F 9/42

(54) **FÜHRUNGSHÜLSE FÜR EINE GASDRUCKFEDER**

(30) Priorität: 21.08.2023 DE 202023104743 U
(71) Anmelder: Craemer GmbH, 33442 Herzebrock-Clarholz (DE)
(72) Erfinder: Potthoff, Sebastian, 33442 Herzebrock-Clarholz (DE); Kampe, Tobias, 59320 Ennigerloh (DE)
(74) Vertreter: Patentanwälte Olbricht Buchhold Keulertz

(57) **Zusammenfassung**

Für eine Führungshülse (4) mit einem als Hülse (5) bezeichneten, im Wesentlichen hohlzylindrischen Abschnitt, wird vorgeschlagen, dass die Führungshülse (4) in der Art ausgestaltet ist, dass sie im Gebrauch auf eine Gasdruckfeder (1) aufsetzbar ist, wobei die Gasdruckfeder (1) eine Kolbenstange (3) und einen Zylinder (2) aufweist und die Hülse (5) dem Zylinder (2) spielfrei anliegt.

## Beschreibung

Die Erfindung betrifft eine Führungshülse für eine Gasdruckfeder.

Aus der Praxis ist bekannt, Gasdruckfedern in Werkzeugen anzuordnen, beispielsweise in Werkzeugen für die Metallbearbeitung, wobei ein Werkstück für einen Bearbeitungsschritt wie Besäumen, Stanzen, Fräsen, Bohren oder dergleichen sicher fixiert werden soll. Das Werkstück wird dafür in eine Halterung des Werkzeugs eingelegt und an einer oder mehreren Stellen wird es mittels einer entsprechenden Anzahl von Teleskopfedern an die Halterung angedrückt. Da sich in der Praxis Gasdruckfedern durchgesetzt haben, wird nachfolgend stets von Gasdruckfedern gesprochen, tatsächlich jedoch kann die vorliegende Erfindung auch bei anderen teleskopierbaren Elementen angewendet werden wie einer Kolben-Zylinder-Einheit, bei welcher die Kolbenstange durch eine Wendelfeder aus dem Zylinder ausgefahren wird, oder eine hydraulische Kolben-Zylinder-Einheit. Stets weisen die Gasdruckfedern, Teleskopfedern bzw. Kolben-ZylinderEinheiten einen Zylinder sowie eine aus- und einfahrbare Kolbenstange auf. Der Zylinder weist zwei Enden auf, die im Rahmen des vorliegenden Vorschlags als kolbenstangeseitiges Ende, aus dem die Kolbenstange ragt, und gegenüberliegend als bodenseitiges Ende bezeichnet werden.

In dem Werkzeug ist die Gasdruckfeder in einer Bohrung aufgenommen, wobei sich der Zylinder wenigstens teilweise - und üblicherweise vollständig - in der Bohrung befindet, während die Kolbenstange zumindest in ihrer ausgefahrenen Stellung aus der Bohrung herausragt. An seinem bodenseitigen Ende ist der Zylinder mittels wenigstens einer Schraube gehalten, welche in die Bohrung hineinragt.

Anders als bei selten betätigten Gasdruckfedern, wie sie beispielsweise im Consumer-Bereich zur Abstützung von Hauben oder Klappen an Fahrzeugen oder Möbeln bekannt sind, muss bei den industriell eingesetzten Gasdruckfedern aufgrund deren häufiger Betätigung auf eine ausreichende Kühlung geachtet werden, da sich durch die in rascher Folge wiederholt erfolgende Kompression des Gases sowie durch die mechanische Reibung der beweglichen Komponenten die Gasdruckfeder aufheizt. Die Bohrung weist daher typischerweise einen Durchmesser auf, der größer ist als der Außendurchmesser des Zylinders, um auf diese Weise einen Luftspalt sicherzustellen, der zur Kühlung des Zylinders dient. Aufgrund dieses Luftspalts und weil in der Praxis in den seltensten Fällen die Druckkräfte auf die Gasdruckfeder in exakt axialer Richtung einwirken, ergeben sich Querkräfte, die den Zylinder aus einer exakt axialen Ausrichtung innerhalb der Bohrung auslenken, was zu einem regelrechten Pendeln oder Wandern des Zylinders innerhalb der Bohrung führen kann.

Diese Bewegungen des Zylinders innerhalb der Bohrung können einerseits zum Lockern der Schraubverbindung führen, mit welcher der Zylinder in der Bohrung fixiert ist. Die Lockerung unterstützt die ungewollte Beweglichkeit des Zylinders innerhalb der Bohrung noch weiter. Zudem kann sich die Schraube ggf. vollständig von dem Zylinder lösen, was erstens aufgrund des unkontrolliert beweglichen Bauteils (Schraube) gefährlich ist, zweitens aufgrund der unkontrolliert beweglichen, lediglich lose innerhalb der Bohrung geführten Gasdruckfeder die Qualität der Werkstückbearbeitung beeinträchtigen kann, und was drittens eine vergleichsweise aufwendige Reparatur nach sich zieht, weil die Verschraubung mit dem bodenseitigen Ende des Zylinders in dem rückseitigen, vom Werkstück abgewandten und häufig schlecht zugänglichen Bereich des Werkzeugs erfolgen muss.

Unabhängig davon, ob sich eine Verschraubung lockert oder nicht, wirken sich die auf die Gasdruckfeder einwirkenden Querkräfte nachteilig aus: sie führen zu unerwünschten und häufig konstruktiv nicht vorgesehenen Krafteinwirkungen auf Dichtungselemente der Gasdruckfeder und somit zu Leckagen, welche die Federwirkung beeinträchtigen und gänzlich aufheben können. Weiterhin können die Querkräfte dazu führen, dass die Kolbenstangen verbogen werden. Im Ergebnis muss jedenfalls weit vor Erreichen der konstruktiv vorgesehenen Lebensdauer, beispielsweise vor Erreichen einer bestimmten Anzahl von Lastspielen, die Gasdruckfeder ausgetauscht werden. Dies ist erstens ohnehin aufgrund des erforderlichen Neuteils wirtschaftlich nachteilig, und die oben erwähnte, schlechte Zugänglichkeit der Verschraubungsstelle macht die Reparatur zusätzlich zeitaufwendig.

Der Erfindung liegt die Aufgabe zugrunde, ein Mittel anzugeben, welches eine verlängerte Nutzungsdauer einer in einer Bohrung angeordneten Gasdruckfeder ermöglicht. Weiterhin liegt der Erfindung die Aufgabe zugrunde, ein Werkzeug anzugeben, bei dem eine in einer Bohrung aufgenommene Gasdruckfeder eine möglichst lange Nutzungsdauer aufweist, sowie eine Gasdruckfeder anzugeben, die eine möglichst lange Nutzungsdauer aufweist, wenn sie in einer Bohrung eines Werkzeugs angeordnet ist.

Diese Aufgabe wird durch eine Führungshülse nach Anspruch 1, ein Werkzeug nach Anspruch 14, eine Gasdruckfeder nach Anspruch 15, und durch die Verwendung einer Führungshülse nach Anspruch 16 gelöst. Vorteilhafte Ausgestaltungen sind in den Unteransprüchen beschrieben.

Die Erfindung schlägt mit anderen Worten eine Führungshülse vor, die so ausgestaltet ist, dass sie dem Zylinder einer Gasdruckfeder spielfrei anliegen kann. Die Führungshülse besteht im einfachsten Fall lediglich aus einem im Wesentlichen hohlzylindrischen Abschnitt, so dass sie außen um den Zylinder verläuft. Ihre Wandstärke ist auf die Bohrung des Werkzeugs abgestimmt, so dass der Zylinder seinerseits spielfrei in der Bohrung gehalten ist. Durch diese Führung des Zylinders in der Bohrung wird erreicht, dass sich der Zylinder in der Bohrung nicht schräg stellen kann. Die Gefahr, dass sich eine Schraube am bodenseitigen Ende des Zylinders lockert, wird dadurch verringert. Bei ausreichender Klemmkraft, die durch die Materialbeschaffenheit, die Wandstärke sowie die Formgebung der Hülse bestimmt wird, z. B. durch eine Profilierung an deren äußeren und inneren Oberflächen, kann der Zylinder ggf. sogar unter Verzicht auf eine Verschraubung ausreichend sicher in der Bohrung gehalten werden, beispielsweise insbesondere dann, wenn die Gasdruckfeder aufrecht und mit ihrer Kolbenstange nach oben weisend ausgerichtet ist. Je nach Ausgestaltung der äußeren Mantelfläche des Zylinders und / oder der inneren Wandfläche im Werkzeug, welche die Bohrung begrenzt, kann bei einer entsprechenden Profilierung sowie einer dazu komplementären Ausgestaltung der Führungshülse sogar ein Formschluss geschaffen werden, der einen besonders sicheren Halt der Gasdruckfeder in der Bohrung ermöglicht. Ggf. können daher auch "hängend" ausgerichtete Gasdruckfedern mit nach unten weisender Kolbenstange ohne eine Verschraubung sicher in der Bohrung des Werkzeugs gehalten werden.

Ein weiterer Vorteil der Führungshülse kann in der thermischen Wirkung auf die Gasdruckfeder bestehen. Die Erfindung geht in diesem Zusammenhang von der Überlegung aus, dass Luft ein schlechter Wärmeleiter ist. Anstelle eines Luftspalts, der um die Gasdruckfeder herum in der Bohrung des Werkzeugs verbleibt und häufig von den Herstellern der Gasdruckfedern zur Kühlung der Gasdruckfeder vorgeschrieben ist, kann sich in überraschender Weise eine bessere Kühlungswirkung für die Gasdruckfeder daraus ergeben, dass diese mittels der Führungshülse an das Werkzeug thermisch angekoppelt wird. Diese Möglichkeit hängt einerseits vom Material und damit der Wärmeleitfähigkeit der Führungshülse ab, und andererseits davon, welches Temperaturniveau das Werkzeug um die Bohrung herum aufweist. Ggf. hängt diese Möglichkeit auch von der Wärmeleitfähigkeit des Werkzeugs ab, wobei in der Praxis das Werkzeug erwartungsgemäß in den meisten Fällen aus Stahl bestehen wird, mit einer dementsprechend guten Wärmeleitfähigkeit, um die Wärme der Gasdruckfeder gut ableiten zu können.

Grundsätzlich kann die Führungshülse aus den unterschiedlichsten Werkstoffen bestehen, beispielsweise aus Metall. In einer Ausgestaltung besteht die Hülse der Führungshülse aus einem Kunststoffmaterial. Dies bietet die Möglichkeit, preisgünstig und in vergleichsweise kleinen Serien Führungshülsen präzise mit der jeweils erforderlichen Geometrie herzustellen, beispielsweise im 3-D-Druck oder durch eine spanabhebende Bearbeitung eines Kunststoff-Halbzeugs, die im Vergleich zur Bearbeitung eines metallischen Halbzeugs erheblich wirtschaftlicher ist. Dabei ist davon auszugehen, dass die Gasdruckfedern zwar in großen Stückzahlen hergestellt werden und handelsüblich sind, die Bohrungen in den Werkzeugen jedoch unterschiedlich ausgestaltet sein können, so dass auch ein einziger Typ von Gasdruckfeder eine Mehrzahl unterschiedlicher Führungshülsen erfordert, je nach individuellem Anwendungsfall. Angepasst an den äußeren Durchmesser des Zylinders der Gasdruckfeder sowie an den inneren Durchmesser der Bohrung und ggf. an weitere Erfordernisse kann die aus Kunststoff bestehende Führungshülse preisgünstig auch in kleineren Stückzahlen bereitgestellt werden, und größere Stückzahlen können wirtschaftlich vorteilhaft im Spritzgussverfahren hergestellt werden.

Auch hinsichtlich der thermischen Ankopplung an das umgebende Werkzeug kann eine aus Kunststoff bestehende Führungshülse vorteilhaft sein, mit einer zwar geringeren Wärmeleitfähigkeit als eine metallische Führungshülse, aber mit möglicherweise besserer Wärmeleitfähigkeit als die in einem Luftspalt der Bohrung befindliche Luft.

In einer Ausgestaltung weist die Hülse der Führungshülse wenigstens einen Wandanteil und wenigstens eine Durchbrechung auf. Beispielsweise kann die Hülse aus einem rechteckigen, zweidimensionalen Materialzuschnitt bestehen, der um den Zylinder der Gasdruckfeder gelegt werden kann und anschließend mitsamt dem Zylinder in die Bohrung des Werkzeugs eingeführt wird. Dabei muss dieser Materialzuschnitt, der den Wandanteil der Hülse bildet, nicht um den ganzen Umfang des Zylinders herum verlaufen, so dass ein Spalt verbleibt, der die Durchbrechung der Hülse bildet. Diese Variante der Hülse weist keinen geschlossenen, ringförmigen Querschnitt auf, sondern einen offenen, annähernd C-förmigen Querschnitt. Auch mit einem solchen Spalt kann die Hülse die gewünschte Abstützung der Gasdruckfeder in der Bohrung des Werkzeugs sicherstellen, um Schrägstellungen der Gasdruckfeder innerhalb der Bohrung zu verhindern. In einer anderen Ausgestaltung kann die Hülse netzartig oder käfigartig ausgestaltet sein, so dass sie mehrere Wandanteile und mehrere Durchbrechungen aufweist. Auch eine derartige Ausgestaltung der Hülse kann die Gasdruckfeder in der Bohrung kippsicher führen, außerdem gleichen die reduzierten Wandanteile die Toleranzpaarung der Bohrung und der Gasdruckfeder aufgrund der nur noch punktuellen Anlageflächen leichter aus. Die Ausgestaltung mit einem oder mehreren Wandanteilen und einer oder mehreren Durchbrechungen ermöglicht insbesondere dann, wenn die Hülse im 3-D Druck hergestellt wird, aufgrund des verringerten Materialeinsatzes die Herstellung der Hülse zusätzlich zu den reduzierten Materialkosten in möglichst kurzer Zeit und somit besonders wirtschaftlich.

Die eine oder mehrere Durchbrechungen der Hülse können außerdem beispielsweise dann vorteilhaft sein, wenn die thermische Ankopplung der Gasdruckfeder mittels der Hülse an das Werkzeug eine geringere Wärmeableitung von der Gasdruckfeder ermöglicht als die Luft. Dies kann beispielsweise der Fall sein, wenn aufgrund der Ausgestaltung und der Einsatzbedingungen des Werkzeugs eine Luftströmung in der Bohrung des Werkzeugs herrscht, so dass die Wärme der Gasdruckfeder mittels erzwungener Konvektion abgeführt werden kann. In diesem Fall kann die Hülse so ausgestaltet sein, dass die eine oder mehreren Durchbrechungen in der Hülse einen Strömungskanal schaffen, der sich über die Länge der Hülse bis zu einem axialen Ende des Sicherungskäfigs erstreckt.

Geht man davon aus, dass die Bohrung typischerweise als Sackbohrung ausgestaltet ist, verläuft der Strömungskanal vorzugsweise bis zu dem Ende der Hülse, welches der offenen Mündung der Sackbohrung benachbart ist, so dass von dort Luft in den Strömungskanal einströmen oder Warmluft aus dem Strömungskanal ausströmen kann und aus dem Werkzeug sowie von der Gasdruckfeder abgeführt werden kann. Die Hülse kann zwei oder mehr Strömungskanäle aufweisen, um eine regelrechte Zirkulation um den Zylinder der Gasdruckfeder herum innerhalb der Bohrung zu ermöglichen, bei welcher Frischluft von außen in die Bohrung gelangt, um den Zylinder strömt und anschließend aus der Bohrung als erwärmte Luft wieder austritt.

In einer Ausgestaltung weist die Führungshülse zusätzlich zu der Hülse einen Kragen auf, der sich von der Hülse radial nach innen erstreckt. Der Kragen weist eine zentrale Durchgangsöffnung auf, durch die sich die Kolbenstange erstreckt, wenn die Führungshülse auf der Gasdruckfeder montiert ist. Der Kragen liegt dem kolbenseitigen Ende des Zylinders an und wirkt als Mitnehmer, wenn die Gasdruckfeder aus der Bohrung herausgezogen wird, so dass mit der Gasdruckfeder auch die Führungshülse zuverlässig und ohne umständliche Nacharbeiten aus der Bohrung entfernt werden kann, was einen Austausch der Gasdruckfeder erleichtert und innerhalb kurzer Zeit ermöglicht. Der erwähnte Strömungskanal verläuft in einer Ausgestaltung in der Hülse bis zu dem Rand eines solchen Kragens, um den Luftaustausch mit der Luft außerhalb des Werkzeugs zu ermöglichen.

In einer Ausgestaltung weist die Hülse Vorsprünge auf, die radial nach innen, zur Gasdruckfeder hin ragen und / oder radial nach außen, zu der die Bohrung begrenzenden Wand des Werkzeugs hin, ragen. Diese Vorsprünge bewirken ein Toleranzausgleich angesichts möglicher Toleranzen im äußeren Durchmesser des Zylinders der Gasdruckfeder, im Durchmesser der Bohrung sowie in der Wandstärke der Hülse. Dadurch, dass die Hülse nicht insgesamt eine gleichmäßige Wandstärke, sondern die Vorsprünge aufweist, kann bei einer geringfügigen Überdimensionierung der Wandstärke bzw. bei einem zu geringen Spaltmaß des Luftspalts zwischen der Gasdruckfeder und der Wand der Bohrung eine Verformung der einzelnen Vorsprünge erfolgen. Die Hülse kann daher einerseits problemlos um die Gasdruckfeder herum in der Bohrung aufgenommen werden und andererseits einen zuverlässig sicheren Klemmsitz bewirken, um die Gasdruckfeder in der Bohrung zu sichern und ggf. auf eine Schraubmontage der Gasdruckfeder in der Bohrung zu verzichten.

Die Vorsprünge sind in einer Variante als Kuppen ausgestaltet, also nicht als prismatische Körper mit einem konstanten Querschnitt, sondern vielmehr als Erhebungen, die zum Rand hin flacher werden. Als Kuppe ist ein Vorsprung flächiger ausgestaltet als beispielsweise eine Rippe, so dass der Vorsprung in Form einer Kuppe vor mechanischen Beschädigungen gut geschützt ist, beispielsweise vor Einreißen, Abreißen oder dergleichen. Eine Kuppe kann beispielsweise als Kugelsegment mit einem kreisförmigen Querschnitt ausgestaltet sein, oder als Kissen mit einem linsenförmigen, viereckigen oder ovalen Querschnitt.

In einer Ausgestaltung weist die Hülse einen Ablaufkanal auf, der bis zu einem axialen Ende der Hülse verläuft. Überschüssiges Öl, was bei der Benutzung des Werkzeugs z.B. in Form von Schneidöl in die Bohrung gelangt, kann durch den Ablaufkanal problemlos aus der Bohrung abgeführt werden.

In einer Ausgestaltung ist der Ablaufkanal dadurch verwirklicht, dass die Hülse eine bereichsweise verringerte Materialstärke aufweist, um so den Ablaufkanal zu bilden.

Wenn die Führungshülse einen Kragen aufweist, verläuft der Ablaufkanal in einer Ausgestaltung bis zu dem vom Kragen entfernten Ende der Hülse, so dass Flüssigkeit, die sich in der Bohrung unterhalb der Führungshülse gesammelt hat, problemlos aufsteigen und an der Führungshülse entlang abgeführt werden kann. Alternativ kann die Flüssigkeit durch eine Entlastungsbohrung abgeführt werden, die an die Bohrung anschließt, in welcher die Gasdruckfeder aufgenommen ist.

Die Hülse kann grundsätzlich mittels eines Klemmdrucks die Gasdruckfeder innerhalb der Bohrung halten. In einer Ausgestaltung weist die Hülse jedoch einen radial nach innen ragenden Haltevorsprung auf, der an die zu verwendende Gasdruckfeder angepasst ist und so ausgestaltet ist, dass die Hülse im Gebrauch in eine Vertiefung des Zylinders der Gasdruckfeder eingreift und einen Formschluss mit dem Zylinder bewirkt. Die Zylinder der Gasdruckfedern weisen in der Praxis häufig umlaufende Nuten auf, so dass in Abhängigkeit von der Querschnittsgeometrie der jeweiligen Nut der Haltevorsprung ausgestaltet ist. Durch axiale Verschiebung kann die Hülse auf dem Zylinder der Gasdruckfeder so positioniert werden, dass der Haltevorsprung formschlüssig in die Nut eingreift. Wenn die Führungshülse zusätzlich zu der Hülse auch den erwähnten Kragen aufweist und daher die axiale Position der Hülse auf dem Zylinder der Gasdruckfeder vorgegeben ist, ist zusätzlich zu der Anpassung an die Querschnittsgeometrie der Nut auch die Position des Haltevorsprungs in axialer Richtung an der Hülse durch die jeweilige Ausgestaltung der Gasdruckfeder vorgegeben.

Der Haltevorsprung kann punktuell als Noppe ausgestaltet sein, wobei auch mehrere Noppen der Hülse zum Eingriff in mehrere oder auch nur in dieselbe Vertiefung des Zylinders angeordnet sind. In einer Ausgestaltung ist der Haltevorsprung als Rippe ausgestaltet, die im Wesentlichen quer zur Längsachse der Hülse verläuft, in Anpassung an die praxisüblichen umlaufenden Nuten der Zylinder von Gasdruckfedern. Im Vergleich zu einzelnen Noppen bewirkt eine Rippe höhere Haltekräfte des erzielten Formschlusses, und sie ist unempfindlicher gegenüber mechanischen Beschädigungen, z.B. Einreißen an der Hülse oder Abrei-ßen von der Hülse.

Die Erfindung betrifft auch ein Werkzeug, welches in an sich bekannter Weise zur Aufnahme einer Gasdruckfeder ausgestaltet ist und eine dazu bestimmte Bohrung aufweist, in welcher die Gasdruckfeder zumindest teilweise aufgenommen ist. Das Werkzeug ist mit einer erfindungsgemäßen Führungshülse ausgestattet, wobei die Hülse innerhalb der Bohrung angeordnet ist, nämlich in dem Ringspalt, der sich innerhalb der Bohrung rings um den Zylinder der Gasdruckfeder ergibt. Die Hülse ist so ausgestaltet, dass die Gasdruckfeder spielfrei innerhalb der Bohrung geführt ist.

Die Erfindung betrifft weiterhin eine Gasdruckfeder, die in an sich bekannter Weise einen Zylinder und eine Kolbenstange aufweist, und die mit einer erfindungsgemäßen Führungshülse versehen ist, wobei die Hülse der Führungshülse dem Zylinder spielfrei anliegt. Eine solche, mit der Führungshülse versehene Gasdruckfeder kann bei einem erforderlichen Austausch einer verschlissenen Gasdruckfeder in eine entsprechende Bohrung eines Werkzeugs eingeführt werden. Die dazu erforderlichen Kräfte können, wie erste, nicht-öffentliche Versuche gezeigt haben, so gering bemessen sein, dass die Gasdruckfeder samt Führungshülse von Hand in die Bohrung eingeführt werden kann, ohne ein Presswerkzeug oder dergleichen zu verwenden, wobei dennoch eine spielfreie Führung des Zylinders der Gasdruckfeder innerhalb der Bohrung gewährleistet werden kann. Dennoch kann ein Werkzeug verwendet werden, wenn dies die Montage und / oder Demontage der Gasdruckfeder erleichtert.

Schließlich betrifft die Erfindung die Verwendung einer erfindungsgemäßen Führungshülse zur spielfreien Führung einer Gasdruckfeder in einem Werkzeug, welches eine Bohrung aufweist, in der die Gasdruckfeder aufgenommen ist. Wenn in der einfachsten konstruktiven Ausgestaltung der erfindungsgemäßen Führungshülse die Führungshülse auf den Abschnitt begrenzt ist, welcher die Hülse bildet, so können ggf. Bauteile, die bereits handelsüblich sind, verwendet werden um als Führungshülse im Sinne der vorliegenden Erfindung verwendet zu werden.

Ein Ausführungsbeispiel der Erfindung wird anhand der rein schematischen Zeichnungen nachfolgend näher erläutert. Dabei zeigt
- Fig. 1: eine perspektivische Ansicht auf eine Gasdruckfeder, die mit einem Ausführungsbeispiel einer Führungshülse versehen ist,
- Fig. 2: eine Ansicht in axialer Richtung auf die Führungshülse von Fig. 1,
- Fig. 3: eine perspektivische Ansicht auf die Führungshülse von Fig. 1, und
- Fig. 4: einen Schnitt in axialer Richtung durch die Anordnung von Fig. 1, wobei die Gasdruckfeder samt Führungshülse in einer Bohrung eines Werkzeugs angeordnet ist.

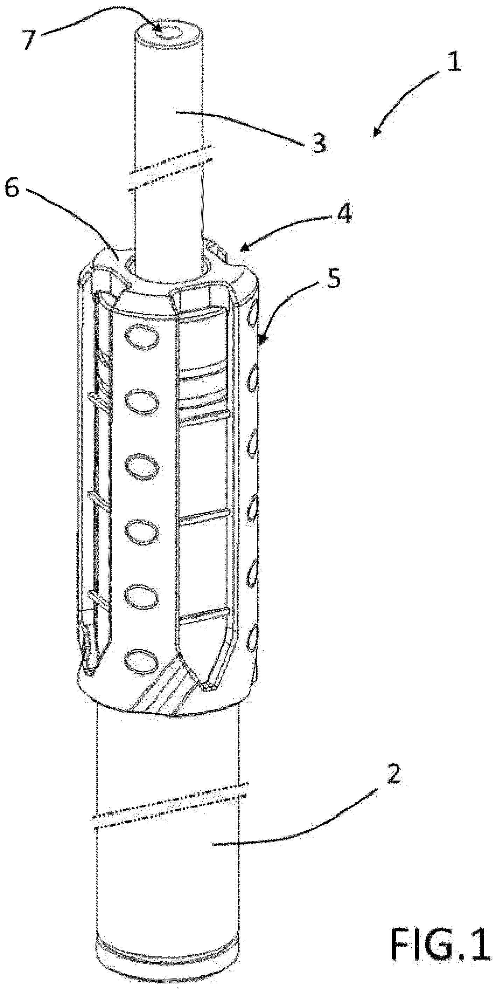

Fig. 1 zeigt eine Gasdruckfeder 1, die einen Zylinder 2 und eine Kolbenstange 3 aufweist, wobei die Kolbenstange 3 in axialer Richtung relativ zu dem Zylinder 2 beweglich ist. Auf der Gasdruckfeder 1 ist eine Führungshülse 4 montiert, die aus einem Kunststoffmaterial besteht und zwei Abschnitte aufweist: ein erster, im Wesentlichen hohlzylindrischen Abschnitt ist als Hülse 5 bezeichnet und ein zweiter Abschnitt, der als Kragen 6 bezeichnet ist, erstreckt sich von der Hülse 5 aus radial nach innen.

An ihrem oberen, freien Ende weist die Kolbenstange 3 eine Anschlussbohrung 7 auf, die als Gewindebohrung ausgestaltet sein kann und zum Anschluss der Gasdruckfeder 1 an beispielsweise ein Andruckelement genutzt werden kann, mittels welchem ein zu bearbeitendes Werkstück in der gewünschten Position gehalten werden kann. Am gegenüberliegenden Ende ist die Gasdruckfeder 1 am sogenannten Boden des Zylinders 2 mit einer in Fig. 1 nicht ersichtlichen Haltebohrung versehen, die als Gewindebohrung ausgestaltet ist und mit welcher die Gasdruckfeder 1 an einem Werkzeug festgelegt werden kann.

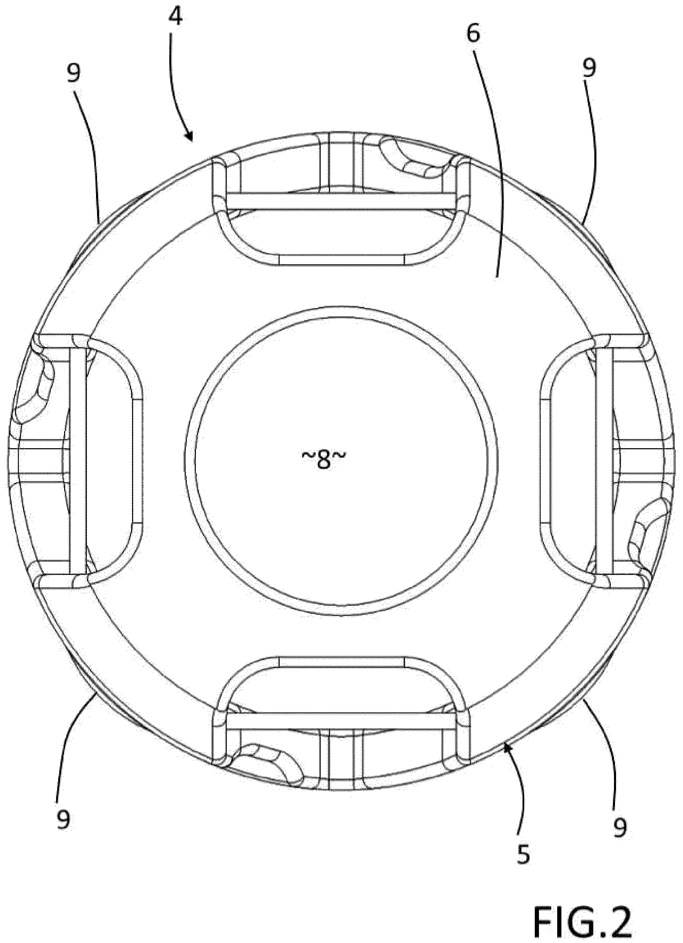

Fig. 2 zeigt die Führungshülse 4 in einer axialen Blickrichtung auf den Kragen 6. Der Kragen 6 verläuft um eine Durchgangsöffnung 8, durch die sich die Kolbenstange 3 erstrecken kann, wenn die Führungshülse 4 auf die Gasdruckfeder 1 aufgesetzt wird. Am Umfang der Hülse 5 verteilt sind Vorsprünge 9 angeordnet, die als Kuppen ausgestaltet sind.

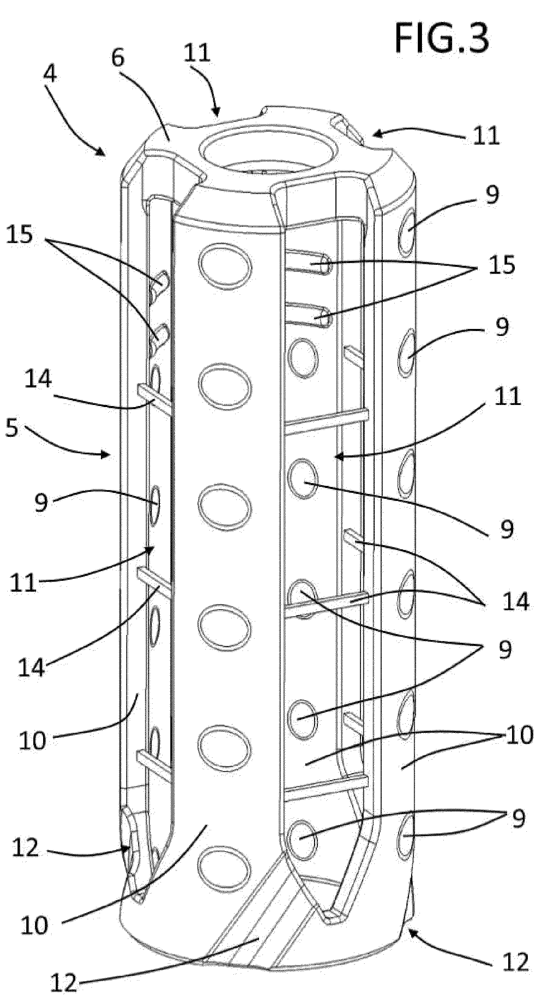

Fig. 3 zeigt die Führungshülse 4 in einer perspektivischen Ansicht. Die Hülse 5 weist Wandanteile 10 und Durchbrechungen 11 auf, die sich jeweils in axialer Richtung über die Hülse 5 erstrecken, wobei die Durchbrechungen 11 auch in den Kragen 6 hineinragen. Die Durchbrechungen 11 schaffen Strömungskanäle zur Belüftung des Zylinders 2 der Gasdruckfeder 1. An dem bodenseitigen, in Fig. 3 unten dargestellten Ende der Führungshülse 4 sind die Wandanteile 10 der Hülse 5 miteinander verbunden und schaffen einen geschlossenen Ring am bodenseitigen Ende der Führungshülse 4.

Im Bereich dieses Rings verlaufen Ablaufkanäle 12 von den Durchbrechungen 11 bis zum bodenseitigen Ende der Hülse 5, wobei die Ablaufkanäle 12, anders als die Durchbrechungen 11, in das Material der Hülse 5 ein geformt sind, so dass die Hülse 5 im Bereich der Ablaufkanäle 12 nicht vollständig durchbrochen ist, sondern lediglich eine verringerte Wandstärke aufweist. Auch die Durchbrechungen 11 durchsetzen nicht über ihre jeweilige gesamte axiale Länge die Wand der Hülse 5 vollständig. Vielmehr werden die Durchbrechungen 11 durch schmale Stabilisierungsstege 14 unterbrochen, die allerdings eine geringere Wandstärke aufweisen als die Wandanteile 10 der Hülse 5, so dass die Strömungskanäle ununterbrochen, an den Stabilisierungsstegen 14 vorbei verlaufen.

Bei dem dargestellten Ausführungsbeispiel ist vorgesehen, dass die Führungshülse 4 im 3D-Druck hergestellt wird, wie dies für kleine Stückzahlen vorteilhaft ist. Die Stabilisierungsstege 14 dienen als Versteifung während des Druckvorgangs, für die Funktion der Führungshülse 4 im Gebrauch sind sie nicht erforderlich. Bei größeren Stückzahlen kann die Führungshülse 4 auf andere Weise hergestellt werden, z. B. im Spritzgussverfahren, und die Stabilisierungsstege 14 können entfallen.

Die Wandanteile 10 der Hülse 5 sind nicht nur außen, sondern auch auf ihrer Innenseite mit Vorsprüngen 9 versehen, die ebenfalls als Kuppen ausgestaltet sind. Die äußeren und die inneren Vorsprünge 9 dienen als Toleranzausgleich in Bezug auf den Durchmesser einer Bohrung, in welcher die Gasdruckfeder 1 aufgenommen werden soll, sowie in Bezug auf den äußeren Durchmesser des Zylinders 2 der Gasdruckfeder 1, und schließlich auch in Bezug auf die Wandstärke der Hülse 5 der Führungshülse 4. Auch angesichts der in der Praxis auftretenden Toleranzen erlauben die punktuellen Vorsprünge 9 eine problemlose Montage der Gasdruckfeder 1 samt Führungshülse 4 in einer solchen Bohrung, verglichen mit einer Führungshülse 4, deren Hülse 5 eine durchgängige Wandstärke aufweisen würde, die der dargestellten Hülse 5 einschließlich der nach innen und der nach außen ragenden Vorsprünge 9 entsprechen würde. Zudem stellen die Vorsprünge 9 den gewünschten Klemmdruck sicher, um die Gasdruckfeder 1 ausschließlich mittels der Führungshülse 4, ohne eine zusätzliche Verschraubung, in der Bohrung eines Werkzeugs halten zu können, zumindest bei solchen Werkzeugen, bei denen die Gasdruckfeder 1 stehend angeordnet ist, also mit nach oben weisender Kolbenstange 3.

Weiterhin ist aus Fig. 3 ersichtlich, dass die Wandanteile 10 der Hülse 5 nach innen ragende Haltevorsprünge 15 aufweisen, die jeweils als Rippe ausgestaltet sind, welche quer zur Längsachse der Hülse 5 verläuft. Die Haltervorsprünge 15 erstrecken sich radial weiter nach innen als die Vorsprünge 9 und dienen zur Schaffung eines Formschlusses mit korrespondierenden Vertiefungen, welche der Zylinder 2 der Gasdruckfeder 1 aufweist, wie nachfolgend näher erläutert wird:

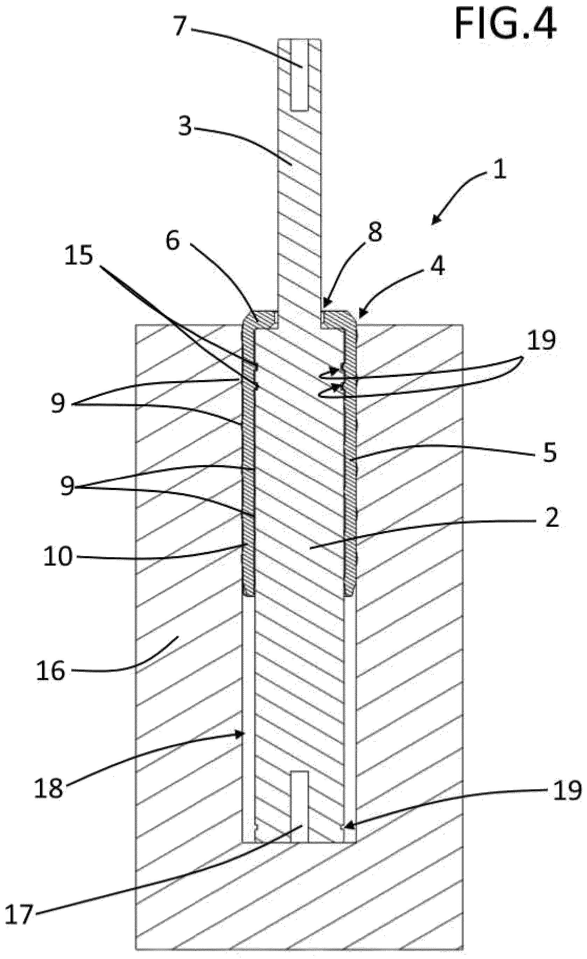

In Fig. 4 ist eine Einbausituation der Gasdruckfeder 1 in einem Werkzeug 16 dargestellt, in Art eines Schnitts, der axial durch die Gasdruckfeder 1 verläuft. Die Gasdruckfeder 1 ist dabei, abweichend von den tatsächlichen Verhältnissen und rein schematisch aus Gründen der zeichnerischen Vereinfachung, als ein einziges Bauteil dargestellt, ohne den tatsächlichen Aufbau der Gasdruckfeder 1 zu berücksichtigen. Dementsprechend sind der Zylinder 2 und die Kolbenstange 3 in der schematisierten Darstellung der Fig. 4 nicht als separate Elemente dargestellt, die relativ zueinander beweglich sind. Außer der Anschlussbohrung 7 am freien Ende der Kolbenstange 3 weist die Gasdruckfeder 1 am gegenüberliegenden, bodenseitigen Ende des Zylinders 2 eine Haltebohrung 17 auf, die als Gewindebohrung ausgestaltet ist und dazu genutzt werden kann, die Gasdruckfeder 1 in einem Werkzeug, welches abweichend von dem dargestellten Werkzeug 16 ausgestaltet ist, mittels einer Verschraubung zu halten.

Das Werkzeug 16 weist eine Bohrung 18 auf, in welcher die Gasdruckfeder 1 so weit aufgenommen ist, dass sich der gesamte Zylinder 2 in der Bohrung 18 befindet. Die Führungshülse 4 ist so weit auf den Zylinder 2 aufgeschoben, dass der Kragen 6 dem kolbenstangeseitigen Ende des Zylinders 2 anliegt. Hierdurch ist die gewünschte Positionierung der Führungshülse 4 an der Gasdruckfeder 1 sichergestellt, bei welcher die Haltevorsprünge 15 der Hülse 5 in Vertiefungen 19 eingreifen, welche außen am Zylinder 2 als quer zur Längsachse der Gasdruckfeder 1 umlaufende Nuten ausgestaltet sind. Auch nahe seinem bodenseitigen Ende weist der Zylinder 2 eine solche Vertiefung 19 auf.

### Bezugszeichen:

- 1: Gasdruckfeder
- 2: Zylinder
- 3: Kolbenstange
- 4: Führungshülse
- 5: Hülse
- 6: Kragen
- 7: Anschlussbohrung
- 8: Durchgangsöffnung
- 9: Vorsprung
- 10: Wandanteil
- 11: Durchbrechung
- 12: Ablaufkanal
- 14: Stabilisierungssteg
- 15: Haltevorsprung
- 16: Werkzeug
- 17: Haltebohrung
- 18: Bohrung
- 19: Vertiefung

## Patentansprüche

1. Führungshülse (4),
mit einem als Hülse (5) bezeichneten, im Wesentlichen hohlzylindrischen Abschnitt,
wobei die Führungshülse (4) in der Art ausgestaltet ist, dass sie im Gebrauch auf eine Gasdruckfeder (1) aufsetzbar ist,
wobei die Gasdruckfeder (1) eine Kolbenstange (3) und einen Zylinder (2) aufweist
und die Hülse (5) dem Zylinder (2) spielfrei anliegt.

2. Führungshülse nach Anspruch 1,
**dadurch gekennzeichnet,**
**dass** die Hülse (5) aus einem Kunststoffmaterial besteht.

3. Führungshülse nach Anspruch 1 oder 2,
**dadurch gekennzeichnet,**
**dass** die Hülse (5) wenigstens einen Wandanteil (10) und wenigstens eine Durchbrechung (11) aufweist.

4. Führungshülse nach Anspruch 3,
**dadurch gekennzeichnet,**
**dass** die Durchbrechungen (11) in der Hülse (5) einen Strömungskanal schaffen, der sich über die Länge der Hülse (5) bis zu einem axialen Ende der Führungshülse (4) erstreckt.

5. Führungshülse nach einem der vorhergehenden Ansprüche,
**gekennzeichnet durch**
einen Kragen (6), der sich von der Hülse (5) radial nach innen erstreckt und eine zentrale Durchgangsöffnung (8) aufweist,
wobei die Führungshülse (4) in der Art ausgestaltet ist,
dass sich im Gebrauch die Kolbenstange (3) der Gasdruckfeder (1) **durch** die Durchgangsöffnung (8) erstreckt.

6. Führungshülse nach den Ansprüchen 4 und 5,
**dadurch gekennzeichnet,**
**dass** der Strömungskanal bis in den Rand des Kragens (6) verläuft.

7. Führungshülse nach einem der vorhergehenden Ansprüche,
**gekennzeichnet durch**
radial nach außen und / oder nach innen ragende Vorsprünge (9) auf der Hülse (5).

8. Führungshülse nach Anspruch 7,
**dadurch gekennzeichnet,**
**dass** die Vorsprünge (9) als Kuppen ausgestaltet sind.

9. Führungshülse nach einem der vorhergehenden Ansprüche,
**dadurch gekennzeichnet,**
**dass** die Hülse (5) einen Ablaufkanal (12) aufweist,
der bis zu einem axialen Ende der Hülse (5) verläuft.

10. Führungshülse nach Anspruch 9,
**dadurch gekennzeichnet,**
**dass** der Ablaufkanal (12) in das Material der Hülse (5) eingeformt ist, indem die Hülse (5) dort eine verringerte Wandstärke aufweist.

11. Führungshülse nach Anspruch 5, und Anspruch 9 oder 10, **dadurch gekennzeichnet,**
**dass** der Ablaufkanal (12) bis zu dem vom Kragen (6) entfernten Ende der Hülse (5) verläuft.

12. Führungshülse nach einem der vorhergehenden Ansprüche,
**dadurch gekennzeichnet,**
**dass** die Hülse (5) einen radial nach innen ragenden Haltevorsprung (15) aufweist,
wobei die Führungshülse (4) in der Art ausgestaltet ist, dass im Gebrauch der Haltevorsprung (15) der Hülse (5) in eine Vertiefung (19) eingreift, die der Zylinder (2) der Gasdruckfeder (1) an seinem äußeren Umfang aufweist.

13. Führungshülse nach Anspruch 12,
**dadurch gekennzeichnet,**
**dass** der Haltevorsprung (15) als Rippe ausgestaltet ist, die im Wesentlichen quer zur Längsachse der Hülse (5) verläuft.

14. Werkzeug (16),
mit einer Bohrung (18), in welcher eine Gasdruckfeder (1) wenigstens teilweise aufgenommen ist,
und mit einer Führungshülse (4) nach einem der vorhergehenden Ansprüche,
wobei die Hülse (5) innerhalb der Bohrung (18) angeordnet ist und in der Art außen um den Zylinder (2) verläuft, dass der Zylinder (2) spielfrei in der Bohrung (18) geführt ist.

15. Gasdruckfeder (1),
mit einem Zylinder (2),
und einer wahlweise in den Zylinder (2) einfahrbaren oder aus dem Zylinder (2) ausfahrbaren Kolbenstange (3), die in dem Zylinder (2) längsbeweglich geführt ist,
und mit einer Führungshülse (4) nach einem der Ansprüche 1 bis 13,
wobei die Hülse (5) dem Zylinder (2) spielfrei anliegt.

16. Verwendung einer Führungshülse (4) nach einem der vorhergehenden Ansprüche 1 bis 13 zur formschlüssigen Fixierung einer Gasdruckfeder (1) in einer Bohrung (18) eines Werkzeugs (16).
